# EUROPEAN PATENT SPECIFICATION

(11) **EP 0 537 694 B1**
(45) Date of publication and mention of the grant of the patent: **16.09.1998**
(21) Application number: 92117490.0
(22) Date of filing: 13.10.1992
(51) Int. Cl.: B01D 53/50, B01D 61/44, C02F 9/00

(54) **Process for treating effluent from flue-gas desulfurization system and apparatus thereof**
Verfahren und Vorrichtung zur Behandlung von Abgas aus einer Rauchgasentschwefelungsanlage
Procédé et dispositif de traitement d'effluent provenant d'une désulfurisation de gaz de fumée

(30) Priority: 17.10.1991 JP 269361/91; 17.10.1991 JP 269362/91
(43) Date of publication of application: 21.04.1993
(73) Proprietor: CHUBU ELECTRIC POWER COMPANY, INCORPORATED, Nagoya-shi Aichi-ken (JP); MITSUBISHI JUKOGYO KABUSHIKI KAISHA, Tokyo (JP); ASAHI GLASS COMPANY LTD., Chiyoda-ku, Tokyo (JP)
(72) Inventor: Horibe, Hideaki, c/o Tita Thermal Power Station, Tita-shi, Aichi-ken (JP); Miwata, Tatunori, c/o Thermal Power Dept., Higashi-ku, Nagoya-shi, Aichi-ken (JP); Yoshida, Hiroshi, c/o Elec. Power R&D Center, -cho, Midori-ku, Nagoya-shi, Aichi-ken (JP); Toyao, Mamoru, c/o Elec. Power R&D Center, -cho, Midori-ku, Nagoya-shi, Aichi-ken (JP); Tsutsui, Kouyou, c/o MITSUBISHI JUKOGYO K.K., Chiyoda-ku, Tokyo (JP); Kotake, Shinichiro, c/o MITSUBISHI JUKOGYO K.K., Chiyoda-ku, Tokyo (JP); Ukawa, Naohiko, c/o Hiroshima R&D Center, Nishi-ku, Hiroshima-shi, Hiroshima-ken (JP); Okino, Susumu, c/o Hiroshima R&D Center, Nishi-ku, Hiroshima-shi, Hiroshima-ken (JP); Nakamura, Tsumoru, c/o Hiroshima R&D Center, Nishi-ku, Hiroshima-shi, Hiroshima-ken (JP); Fukui, Shiro, c/o Chemical Engineering, Koto-ku, Tokyo (JP); Uemachi Norikane, c/o Chemical Engineering, Koto-ku, Tokyo (JP); Aoki, Yoshiharu, c/o Chiba Factory, Ichihara-shi, Chiba-ken (JP)
(74) Representative: Luderschmidt, Schüler & Partner GbR

(56) References cited:
- EP-A- 0 405 619
- DE-A- 3 109 879
- DE-A- 3 713 143
- DE-A- 4 107 927
- US-A- 4 820 391
- PATENT ABSTRACTS OF JAPAN vol. 016, no. 304 (C-0959)6 July 1992 & JP-A-4 083 586 ( BABCOCK HITACHI KK ) 17 March 1992

## Description

### FIELD OF THE INVENTION AND RELATED ART STATEMENT

The present invention relates to a process for treating the effluent from a flue-gas desulfurization system and an apparatus therefor.

More particularly, the invention concerns a process which, in the course of flue-gas desulfurization wherein sulfur oxides acid gas (hereinafter called, together with other similar substances, "SOₓ gas") in the flue gas is fixed and separated as gypsum in the effluent, comprises concentrating the gypsum and fly ash free effluent by electrodialysis and evaporator, kneading it with cement or a cement-coal ash mixture to a solid matter, and disposing of it as a harmless refuse. The invention also pertains to an apparatus for treating (for volume reduction) of the effluent from a flue-gas desulfurization system wherein SOₓ gas is separated by absorption from flue gas using limestone or other alkaline agent as the absorbent.

For the removal of SOₓ gas from flue gas or other combustion waste gas the use of limestone or hydrated lime slurry for its fixation and separation in the form of gypsum is common. The separation of gypsum leaves a large quantity of waste liquor behind, which is recycled to save the cost of effluent treatment. However, the process entails accumulation of chlorine ions in the waste liquor. In view of the materials used in the flue-gas desulfurization system, the chlorine ion concentration in the liquid usually must be kept below 10,000 ppm. With this level as the ceiling, the waste liquor is extracted as an effluent whenever the level is surpassed upwardly.

The effluent contains various constituents including: solids such as gypsum that results from reaction within the desulfurization system and limestone and other substances that did not take part in the reaction; salts such as calcium chloride, magnesium chloride, and iron chloride formed by reaction of the chlorine gas (hereinafter called "Cl gas") in the flue gas with calcium, magnesium, etc. in the absorbent; oxides of metals such as silica and aluminum in the flue gas; fluorine, chemical oxygen demanding (COD) substances, and the burnt ashes in combustion waste gas captured in the desulfurization system. To prevent secondary pollution, the effluent cannot be discharged into public watercourses. It is usually treated at much cost as follows.

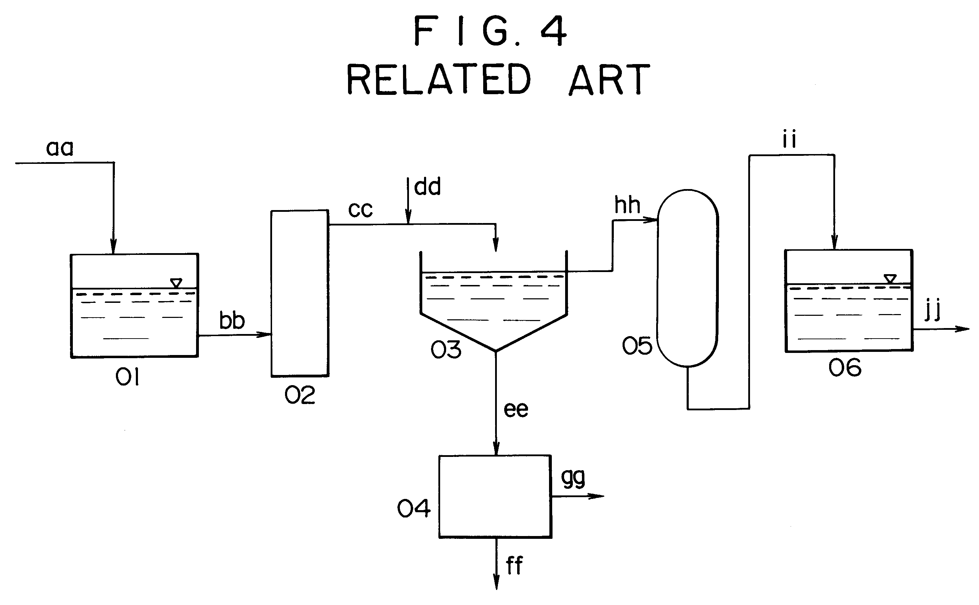

Figure 4 is a flow chart of a conventional art installation for effluent treatment. A conventional process for effluent treatment will now be explained in conjunction with the chart. The effluent from a desulfurization system that is to be treated by this equipment, i.e., the solution to be treated, is led through line aa into a undiluted solution tank 01 for temporary storage. The solution is later fed through line bb to an acid decomposition tank 02, where acid constituents contained in the solution are decomposed. The solution is then conducted through line cc to a solids separation tank 03 where solid constituents are separated from the liquid. While the solution being treated passes through the line cc, an alkali for adjusting the hydrogen ion concentration (hereinafter referred to merely as "pH") of the solution, a coagulant and the like are introduced via line dd. In the solids separation tank 03 solids, such as limestone, gypsum, and combustion residue, are separated from the solution. A solution depleted of solids (hereinafter called "the solid-free solution") and a solution enriched with solids (hereinafter called "the solid-dense solution") are discharged from the tank 03.

The solid-dense solution is sent through line ee to a dehydrator 04, where it is further separated into liquid and solids. The liquid and solids thus separated are driven off from the effluent treatment system via lines ff and gg, respectively.

On the other hand, the solid-free solution from the solids separation tank 03 is sent through line hh to a precision filter 05 such as a sand filter. Here the solid matter not separated in the solids separation tank 03 is separated from the solution. The solution thus made cleaner is conducted through line ii into a treated solution tank 06 for storage. The treated effluent in the solution tank 06 is discharged (after having been confirmed to meet the effluent emission standards) via line jj to a public watercourse.

The conventional effluent treatment installation, as described above, comprises a variety of units including an acid decomposition tank 02 for the treatment of COD substances, a solids separation tank 03 for the separation of solids, and a pH adjustment tank (corresponding to line cc) for adjusting the pH of the effluent being treated.

Thus, the installation is complex in setup, and the individual component units require complicated controls for operation. The operational controls have significant bearings upon the properties of the effluent being discharged from the installation. Under certain circumstances they can render the discharge from the treated solution tank 06 impossible and, in extreme cases, stop the whole system of effluent treatment.

The complexity of installation setup combines with the difficulty of operational control to boost the costs of installation, operation, and maintenance. In addition, they call for a large tract for the site of installation.

US-A-4 820391 discloses an exhaust gas clean-up process using an apparatus for treating the effluent of a flue gas desulfurization system. The apparatus disclosed therein comprises a filter, an electrodialyzer equipped with an alternate arrangement of valance independent cation exchange membranes and anion exchange membranes with concentration and dilution compartments, a concentrator and means for recycling the diluted solution from the dilution compartments to the desulfurization system. The apparatus as disclosed here is not believed to be convincing in achieving a separation of the effluent into a concentrated effluent enriched with solutes and a dilute effluent depleted of the solutes.

EP-A-0 405 619 discloses a process for treating effluent from a flue gas desulfurization system and an apparatus for same. A desulfurization apparatus equipped with an electrodialyzer apparatus to remove chlor anions in the effluent is provided. This apparatus is used to obtain a concentrated product from an effluent stream rather than providing an effective process for separating a filtrate into a dilute solution of a low chlorine ion concentration and a concentrated solution of a high chlorine ion concentration and a low sulfate ion concentration.

### OBJECT AND SUMMARY OF THE INVENTION

The present invention has for its object to provide a process and an apparatus for treating the effluent from a flue-gas desulfurization system while overcoming the above-described defects of the prior art.

The invention, in the first aspect for the solution of the above defects, resides in a process for treating effluent from a flue-gas desulfurization system wherein flue gas containing sulfur oxides gas is brought into contact with limestone or hydrated lime slurry and the sulfur oxides gas is thereby absorbed and removed and then fixed and separated as gypsum, which process comprises filtering the liquid freed from the gypsum and other suspended matters by a filter, transferring the filtrate to an electrodialyzer wherein cation-exchange membranes and univalent anion-exchange membranes are alternately set up, concentrating chlorine ions in the solution therein by dialysis, further concentrating the solution by evaporation in an evaporator, kneading the concentrated solution with cement or a mixture of cement and coal ash to a solid matter with no harm, and thereafter disposing of the solid matter by abandoning.

The invention, in the second aspect for the solution of the above defects, resides in an apparatus for treating effluent from a flue-gas desulfurization system wherein the desulfurization is performed using an alkaline agent, which apparatus comprises a filter for removing suspended solids from the effluent to a turbidity low enough for treatment by an electrodialyzer wherein the effluent is to be separated into a concentrated effluent enriched with solutes and a dilute effluent depleted of the solutes, the electrodialyzer communicated with the filter and equipped with an alternate arrangement of cation-exchange membranes which selectively permeate univalent and divalent cations and anion-exchange membranes which selectively permeate only univalent anions, with concentration and dilution compartments alternately provided between the both ion-exchange membranes, means for conducting the concentrated solution from the concentration compartments of the electrodialyzer to a step for final disposal, and means for recycling the dilute solution from the dilution compartments as makeup water to the desulfurization system.

The invention, in the third aspect for the solution of the above defects, resides in the apparatus defined immediately above, which further comprises a concentrator for concentrating by evaporation the concentrated solution discharged from the concentration compartments of the electrodialyzer.

According to the first aspect of the invention, the filtrate freed from gypsum is separated into a dilute solution of a low chlorine ion concentration and a concentrated solution of a high chlorine ion concentration and a low sulfate ion concentration. The former is utilized as make-up water for a desulfurization system. This precludes troubles which could arise from the accumulation of chlorine ions in the desulfurization system and prevents the formation of gypsum scale in the evaporator where the effluent is concentrated before being discharged from the system.

According to the second and third aspects of the invention, the treatment of effluent by membrane separator means with high solute separation capability makes possible highly efficient separation. Combining the separator means with an evaporator permits effluent concentration at an even higher ratio.

The electrodialyzer that uses cation-exchange membranes capable of selectively permeating uni- and divalent cations and anion-exchange membranes capable of selectively permeating univalent anions can remove the sulfate ions (SO₄²⁻) that form gypsum, the principal constituent of the resulting solid precipitate. The removal of sulfate ions protects the evaporator where the concentrated effluent from the electrodialyzer is further concentrated, from the trouble or efficiency drop of component units under the action of the solid precipitate.

### BRIEF DESCRIPTION OF THE DRAWINGS

Fig. 1 is a block diagram illustrating an apparatus for carrying into practice the treating process according to the first aspect of the invention;
Fig. 2 is a schematic illustration of the principle of an electrodialyzer employed in the apparatus of Fig. 1;
Fig. 3 is a block diagram of a treating apparatus according to the second and third aspects of the invention; and
Fig. 4 is a block diagram of a prior art effluent treating apparatus.

### DETAILED DESCRIPTION OF PREFERRED EMBODIMENTS

The first aspect of the invention will now be described more concretely. In this aspect, the effluent that results from flue-gas desulfurization whereby sulfur oxides gas contained in the flue gas is removed by absorption through contact of the flue gas with limestone or hydrated like slurry and then is fixed and separated as gypsum, is passed through a filter to remove fine particles of gypsum, coal fly ash and the like until a solids concentration of about 0.2 mg/l is reached. The effluent is then electrodialyzed in an electrodialyzer where cation- and univalent anion-exchange membranes are alternately set up, using a dilute sulfuric acid solution as an anolyte and a dilute hydrochloric acid solution as a catholyte. While sulfate ions (the chemical formula SO₄²⁻, hereinafter referred to as such) are being removed, the effluent is concentrated to a chlorine ion concentration of, e.g., about 10 weight percent. Further, in the evaporator, the chlorine concentration is condensed to, e.g., about 25 weight percent while the evaporator is being kept from the deposition of scale, thus reducing the volume of the liquid. Eventually this liquid is solidified by kneading with cement or a mixture of cement and coal ash for abandoning.

In the meantime, the sulfate ion-containing dilute aqueous solution generated by the electrodialysis is recycled to the desulfurization system. Thus, the flue-gas desulfurization system incorporating the present invention produces no secondary effluent.

Filters of varied types appear usable for the invention. Generally, however, a unit capable of precision filtration is used because the electrodialyzer at the ensuing stage requires the removal of solids down to a solids concentration of about 0.2 mg/l.

The electrodialyzer for use in the invention comprises concentration compartments and dilution compartments formed by an alternate arrangement of cation-exchange membranes and univalent anion-exchange membranes, and cathode and anode plates at both extreme ends of the compartments. The cation-exchange membranes selectively permeate positive ions such as calcium and magnesium, while the univalent anion-exchange membranes selectively permeate univalent negative ions such as chlorine. From the both compartments concentrated solutions with a large dissolved salt content and diluted solutions lean in dissolved salts are simultaneously taken out.

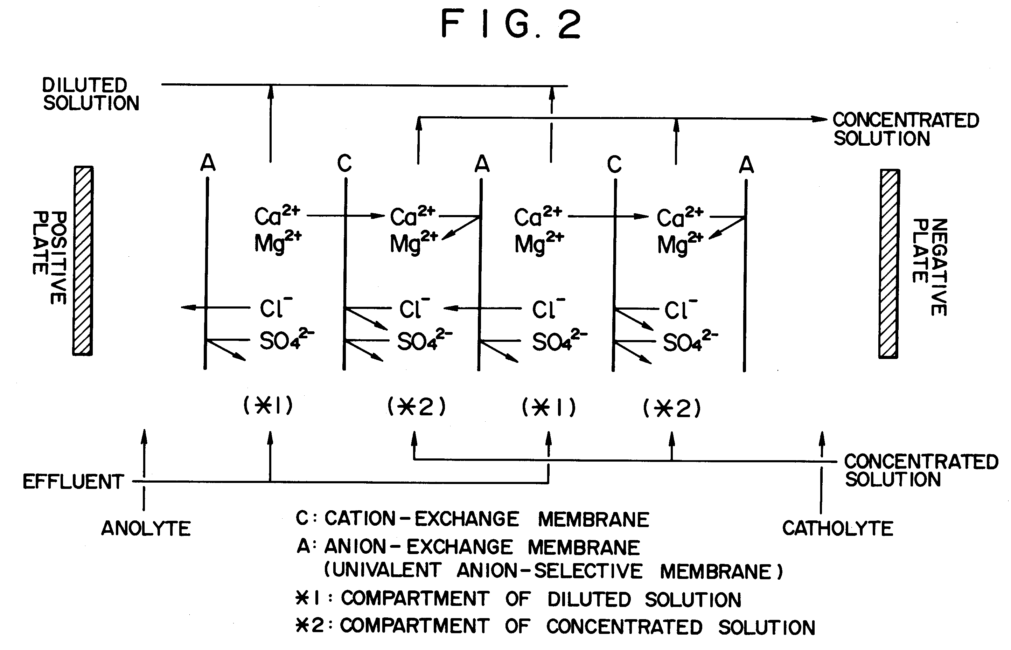

Fig. 2 schematically illustrates the construction of the electrodialyzer and the ionic migration involved. As shown, calcium, magnesium, and chlorine ions that constitute calcium chloride (CaCl₂) and magnesium chloride (MgCl₂), the two major components in the effluent, are caused to migrate by the electric field generated between the anode and cathode plates. During the migration the ions are selectively permeated or hindered by the cation- and anion-exchange membranes. The resulting concentrated and diluted solutions are taken out of the electrodialyzer. Cations such as calcium and magnesium migrate toward the cathode plate and pass through a cation-exchange membrane into a concentration compartment. They tend to continue the migration toward the cathode plate but are obstructed by a univalent anion-exchange membrane to remain in the concentration compartment. Meanwhile, chlorine ion migrates toward the anode plate and permeates through a univalent anion-exchange membrane into a concentration compartment. It tries to move farther toward the anode plate but is blocked by a cation-exchange membrane to remain in the concentration compartment, where it combines with a cation migrating contrariwise and carried away by the concentrated solution as a migration medium from the electrodialyzer.

The reason for which a univalent selective membrane is used as the anion-exchange membrane is that it prevents scaling due to gypsum deposition in the evaporation step where the concentrated effluent from the electrodialyzer is further concentrated. Scaling would reduce the evaporation capacity, cause mechanical damage, and make it impossible to maintain long-term stability of the evaporation process.

While any type of evaporator is employable for the present invention, a vacuum type, thin film type, or the like is preferred.

As for the kneader to be used under the invention in mixing the concentrated solution with cement, with or without the addition of coal ash, a screw feeder type, vibration type, or other kneader equivalent to those usually used in caking the flyash from municipal refuse incinerators.

Typical mixing ratios for the concentrated solution and cement, with or without the addition of coal ash, are as follows. When the concentrated solution is used with cement, a ratio of 2:1, and when the liquid is used with cement and coal ash, a ratio of about 3:1:2, are suitable in consideration of the installation and operation costs. The mixing ratio, of course, varies with the preference given to the cost of operation or equipment and hardness and other properties required of the kneaded matter. The product leaving the kneader is disposed of following, when the need arises, compacting and curing (including drying).

### Example 1

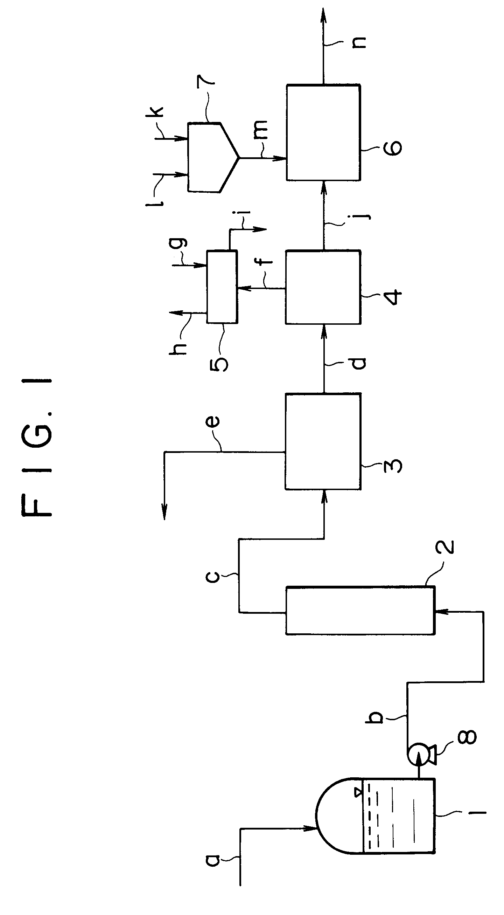

To demonstrate the effectiveness of effluent treatment in accordance with the first aspect of the present invention, an experiment was conducted with an apparatus of the layout shown in Fig. 1. Referring to Fig. 1, the numeral 1 indicates a tank for temporarily storing the effluent from a flue-gas desulfurization system (not shown). The numeral 2 designates a precoat filter for removing suspended solids from the effluent; 3, an electrodialyzer for primarily concentrating the effluent; 4, an evaporator for further concentrating the primarily concentrated effluent; 5, a condenser for condensing the vapor generated by the evaporator 4; 6, a solidifier for kneading the effluent secondarily concentrated by the evaporator 4 with cement, with or without the addition of coal ash, to a solid mass; 7, a powder feeder for supplying either cement for solidifying the effluent or either a mixture of cement and coal ash to the solidifier 6 at a controlled rate; and 8, a pump for supplying the effluent from the tank 1 to the precoat filter at a controlled rate.

The effluent from the flue-gas desulfurization system with a salt concentration of 2 wt% as chlorine was received by the tank 1 shown in Fig. 1, via line a, at the rate of 500 kg/h. Major components in the effluent are listed in Table 1.

**Table 1**

| Component | Conc. (mg/l) |
|---|---|
| CaCl₂ | 18,000 |
| MgCl₂ | 10,390 |
| NaCl | 1,270 |
| CaSO₄ | 1,420 |

In the experiment the effluent from the tank 1 was fed to the precoat filter 2 by the pump 8 at the rate of 500 kg/h. The precoat filter 2 used diatomaceous earth or perlite as a filter aid. The suspended solid concentration in the effluent at the outlet of the precoat filter 2, or in line c, was maintained not more than 0.2 mg/l. The precoat filter 2 was washed at predetermined intervals of operation because the accumulation of the suspended solids with time increased the filtration resistance.

The filtrate from the precoat filter 2 was transferred to the electrodialyzer 3, where it was separated into a concentrated solution with a high salt concentration (hereinafter called "the primary concentrated solution") and a diluted solution with a low salt concentration. The primary concentrated solution and the diluted solution were discharged through lines d and e, respectively, to the evaporator 4 and the outside of the system. Table 2 presents the specification of the electrodialyzer 3 and the operation conditions used.

**Table 2**

| Item | Condition |
|---|---|
| Membrane surface area | 35 m² |
| Membrane surface flow velocity | 5 cm/sec |
| Current density | 1.8 A/dm² |
| Effluent temperature | 35°C |

In this example the salt concentrations and flow rates of the primary concentrated solution and the diluted solution were as given in Table 3. The salt concentrations in the primary concentrated solution and the diluted solution were, respectively, 10 and 1.13 wt% as chlorine, and the flow rates were 48 and 452 kg/h.

The primary concentrated solution from the electrodialyzer 3 was led through line d to the evaporator 4, where it was concentrated to a salt concentration of 25 wt% as chlorine (the resulting concentrate being hereinafter called "the secondary concentrated solution"). The evaporator used in this example was of the film evaporation type, and the pressure inside was controlled to be -660 mmHg and the liquid temperature inside, 85°C.

The vapor produced by the evaporator 4 was supplied through line f to the condenser 5, where it was cooled and condensed with cooling water introduced through line i. The used cooling water and the condensate were discharged from the system via lines h and i, respectively. The secondary concentrated solution from the evaporator 4 was fed through line j to the solidifier 6 at the rate of 19.2 kg/h.

The cement and coal ash required by the solidifier 6 were supplied at controlled rates through lines l and k to a powder feeder 7, where they were mixed and the mixture then was fed via a metering line m to the solidifier 6. The quantities of cement and coal supplied through lines l and k were 6.4 kg and 12.8 kg, respectively, per hour. Inside the solidifier 6 were kneaded the secondary concentrated solution, cement, and coal ash. The kneaded matter was discharged from the system by way of line n.

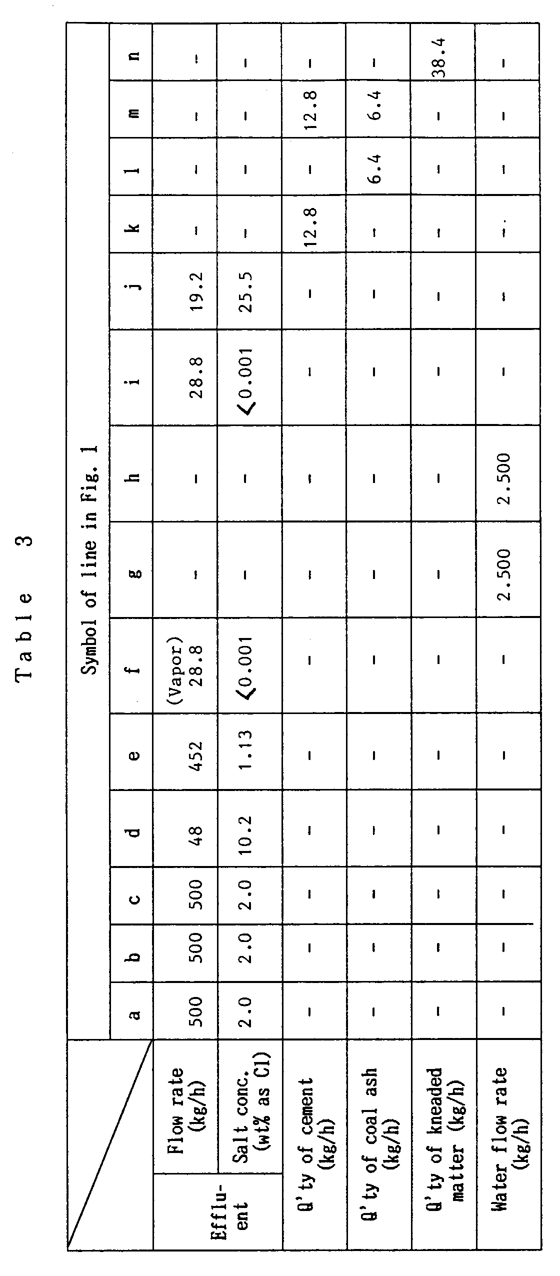

The cement employed for this example was ordinary Portland cement of commerce, and the coal ash was obtained from a coal-fired thermal power plant operating in Japan (on domestic coal).

The kneaded mixture was dried with air at 107°C for 60 minutes to a water content of about 30 wt%. It was tested for elution in conformity with a procedure provided for in an ordinance of the Prime Minister's Office, Japan, and was confirmed to satisfy the leaching standards stipulated in the ordinance.

The concentrations and flow rates in the individual lines so far described in this example are listed in Table 3.

Example 1 proved the effectiveness of the present invention since the process was operated uninterruptedly for 350 hours without any trouble of the apparatus.

According to the first aspect of the invention, the following advantages are offered. In a flue-gas desulfurization process whereby flue gases containing sulfur oxides gas is brought into contact with limestone powder or hydrated lime slurry to remove the sulfur oxides gas by absorption and fix it as gypsum for separation, concentration of the effluent freed from the gypsum does not cause deposition of scale due to precipitation of the gypsum. The concentrated liquid is kneaded with cement or a mixture of cement and coal ash to give a solid matter which is harmless and free of wastewater to a great advantage. The number of apparatus components is limited, the operation is quite simple and can be made practically automatic, and the frequency of maintenance needed is by far the lower than those with conventional effluent treatment system.

Further, the accumulation of the chlorine ion concentration in the effluent freed from gypsum can be retarded for the corrosion control of the apparatus.

### Example 2

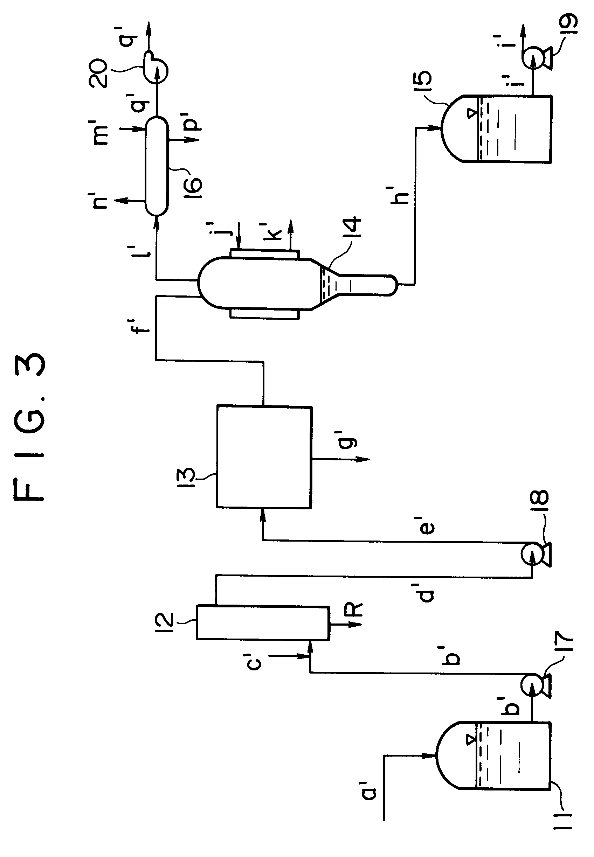

Other embodiments according to the second and third aspects of the invention will be described in detail below with reference to Fig. 3.

Fig. 3 is a flow chart of the embodiment using as filtering means a precoat filter (consisting of a porous base such as ceramics and a precoat of diatomaceous earth, perlite or the like attached in the form of a film to the base) and an evaporator as a secondary concentration unit.

In Fig. 3, the numeral 11 represents a raw water tank for temporarily storing the effluent from a desulfurization system (not shown). Indicated at 12 is a precoat filter as means for removing suspended solids from the effluent to avoid a drop of the separation efficiency owing to the suspended solids in an electrodialyzer 13 now to be described. The electrodialyzer 13 separates the effluent by permeable membranes into a concentrated effluent enriched with solutes (hereinafter called "the primary concentrated effluent") and a dilute solution depleted of the solutes. The numeral 14 designates an evaporator which further concentrates by evaporation the primary concentrated effluent from the electrodialyzer 13 to a secondary concentrated effluent; 15, a secondary concentrated effluent tank for storing the secondary concentrated effluent that leaves the evaporator 14; and 16, a condenser for cooling the vapor that results from the evaporation in the evaporator 14 with cooling water and recovering it as condensed recovery water. The numeral 17 is a pump for supplying the effluent from the raw water tank 11 to the precoat filter 12; 18 is a pump for transferring the treated water from the precoat filter 12 to the electrodialyzer 13; 19 is a pump for discharging the secondary concentrated effluent from the secondary concentrated effluent tank 15 to the outside of the system of the invention; and 20 is an evacuator for producing a negative pressure in the evaporator 14 to promote the evaporation of the primary concentrated effluent therein and forcing the resulting vapor from the evaporator into the condenser 16.

The effluent from a desulfurization system (not shown) is introduced through line a' into the raw water tank 11 for temporary storage and then fed to the precoat filter 12 by way of line b' and the pump 17. The precoat filter 12 consists of a filter aid, such as diatomaceous earth or perlite, formed as a film on a porous substrate so as to filter suspended solids. Here the diatomaceous earth as a filter aid to the precoat filter 12 is supplied via line c'. In the example under review the diatomaceous earth was deposited at the rate of 1 kg per square meter of the filtration area. The effluent freed from the suspended solids by the precoat filter 12 is conducted to the electrodialyzer 13 through line d' and the pump 18. The suspended solid concentration in the effluent in the line d' is so fixed as to enable the downstream electrodialyzer to maintain a concentration capacity beyond a predetermined level for a long period of time. In Example 2 the suspended solid concentration was kept at less than 0.2 ppm to permit uninterrupted operation for one full year.

Since the pressure loss with the precoat filter 12 increases as the filter layer collects more and more suspended solids from the effluent, it was made a rule in this example to take out the suspended solid-contaminated filter aid material from the precoat filter 12 through line R and replenish fresh filter aid material through line c'.

The effluent freed from suspended solids by the precoat filter 12 in this example had a composition as shown in Table 4, containing calcium chloride and magnesium chloride as major constituents, with saturation dissolution of gypsum.

**Table 4**

| Constituent | Concentration (ppm) |
|---|---|
| Calcium chloride | 22,900 |
| Magnesium chloride | 6,800 |
| Gypsum | 2,600 |

In the electrodialyzer 13, cation-exchange membranes selectively permeate divalent and univalent cations such as calcium and magnesium, and anion-exchange membranes do so univalent anion, i.e., chlorine ion. These cation- and anion-exchange membranes are alternately arranged to define concentration and dilution chambers, from which a concentrated solution enriched with solutes (hereinafter called "the primary concentrated effluent) and a dilute solution depleted of the solutes are obtained.

The conditions of the cation- and anion-exchange membranes used in the electrodialyzer 13, such as the membrane surface area, current density, and membrane surface flow velocity, are given in Table 5.

**Table 5**

| Item | Condition |
|---|---|
| Membrane surface area | 1.7 dm² |
| Membrane surface flow velocity | 5 cm/s |
| Current density | 1.8 A/dm ² |
| Liquid temperature | 25°C |

Since sulfate ion (SO₄²⁻) that constitutes gypsum is scarcely permeable through the anion-exchange membrane, gypsum remains in the dilute solution.

The primary concentrated effluent is fed through line f' to the evaporator 14, while the dilute solution is recycled as makeup water through line g to the desulfurization system (not shown) that is the source of the effluent being treated.

In the evaporator 14, the primary concentrated effluent is enriched by evaporation and separated into a secondary concentrated effluent and vapor. The evaporator 14 is of an ordinary externally forced circulation type. To accelerate the vaporization, the evaporator 14 heats the primary concentrated effluent to 85°C with steam or other heating medium, while maintaining a negative pressure of about 660 mmhg throughout. The heating medium is supplied by line j' to the evaporator 14 and is taken out through heat-exchanger line k'. The primary concentrated effluent in the evaporator 14 is enriched in the absence of gypsum, the principal constituent of the solid precipitate. Consequently, the evaporator 14 is free from gypsum-induced troubles of the components, line choking, or other deterioration of performance.

The secondary concentrated effluent from the evaporator 14 is transferred by way of line h' to the secondary concentrated effluent tank 15 for storage. The effluent is then discharged via line i' and the pump 19 to an ensuing station for final disposal.

Meanwhile, the vapor generated in the evaporator 14 is forced through line l' into the condenser 16 by the evacuator 20. Inside the condenser 16 the vapor is cooled and condensed to liquid by cooling water at 20°C and is taken out as condensed recycle water from the condenser 16 through line p'. The condensed recycle water is reusable, depending on its quality, as boiler makeup water or makeup feed to the desulfurization system. In Example 2 the water was determined to have a chlorine concentration of 1 ppm or less. The condenser 16 as used in Example 2, of an ordinary shell and tube type, is supplied with cooling water at 20°C that is necessary for the condensation of vapor, and the used cooling water is discharged from the system through heat-exchanger line n'. Non-condensable gas that remains in the condenser 16 is forced out of the system through line q' and the evacuator 20.

Table 6 shows the Cl and gypsum concentrations at the outlets of the component units in Example 2.

**Table 6**

| | Outlet of raw water tank 11 (line b') | Outlet of precoat filter 12 (line d') | Outlet of electrodialyzer 13 (line f') | Outlet of evaporator 14 (line h') | Outlet of 2nd.conc. effluent tank 15 (line i') |
|---|---|---|---|---|---|
| Calcium chloride conc(ppm) | 22,900 | 22,900 | 123,700 | 301,900 | 301,900 |
| Magnesium chloride conc(ppm) | 6,800 | 6,800 | 36,700 | 89,600 | 89,600 |
| Gypsum conc. (ppm) | 2,600 | 2,600 | 200 | 490 | 485 |

According to the second and third aspects of the invention, the electrodialyzer that is easy to control in operation is used as means for concentrating effluent, and therefore the effluent treatment system is less costly in operation and maintenance and requires a smaller installation area than conventional systems. The primary concentrated effluent from the electrodialyzer, after the removal of solid precipitate, is further concentrated by the evaporator for volume reduction. This permits stable operation of the evaporator, and improves the operation and reduces the cost of final disposal of the effluent.

## Claims

1. A process for treating an effluent from a flue gas desulfurization system wherein flue gas containing sulfur oxides and chlorine values is contacted with limestone or a hydrated lime slurry, the sulfur oxide gas is absorbed and fixed in the slurry as gypsum and the gypsum is separated leaving a liquid containing chloride ions, which comprises filtering the liquid containing the chloride ions from gypsum/coal fly ash contained therein by filtration, subjecting the filtrate to electrodialysis in an electrodialyzer comprising concentration compartments and dilution compartments formed by an alternate arrangement of cation-exchange membranes which selectively permeate cations and univalent anion-exchange membranes which selectively permeate univalent anions to produce a concentrated chloride ion containing solution in the concentration compartments and dilute chloride ion containing solution in the dilution compartments, subjecting the concentrated chloride ion containing solution to further concentration by evaporation in an evaporator, kneading the thus further concentrated solution with cement or a mixture of cement and coal ash to form a solid and thereafter disposing of the solid matter for landfilling.

2. A process as disclosed in claim 1, wherein the dilute chloride ion containing solution is recycled as make up water to the desulfurization system.

3. An apparatus for treating effluent from a flue gas desulfurization system wherein the desulfurization is performed using an alkaline agent, which apparatus comprises a filter for removing suspended solids from the effluent to a turbidity low enough for treatment by an electrodialyzer wherein the effluent is to be separated into a concentrated effluent enriched with solutes and a dilute effluent depleted of the solutes, the electrodialyzer communicated with the filter and equipped with an alternate arrangement of cation-exchange membranes which selectively permeate univalent and bivalent cations and anion-exchange membranes which selectively permeate only univalent anions, with concentration and dilution compartments alternately provided between the both ion-exchange membranes, means for conducting the concentrated solution from the concentration compartments of the electrodialyzer for final disposal, and means for recycling the dilute solution from the dilution compartments as makeup water to the desulfurization system.

4. The apparatus as claimed in claim 3, which further comprises a concentrator for concentrating by evaporation the concentrated solution discharged from the concentration compartments of the electrodialyzer.

5. The apparatus as claimed in claim 3 or claim 4, in which ion exchange membranes, for forming an electric field for electrophoresis, are formed as anion-exchange membranes at the anode plate site by sequentially arranging three anion-exchange membranes and, as cation-exchange membranes at the cathode plate site, by sequentially arranging two cation-exchange membranes, arranging a cation-exchange membrane and an anion-exchange membrane alternately.

6. A process for treating an effluent from a flue gas desulfurization system, as claimed in claim 1, characterized by performing electrodialysis by passing
- an effluent between both pole plates of the desulfurization effluent treating electrodialysis apparatus of one of the claims 3 to 5 and the adjacently disposed anion-exchange membranes,
- a diluted solution between the first anion-exchange membrane and the first cation-exchange membrane and between the second anion-exchange membrane and the second cation-exchange membrane, adjacent to the anode plate and
- a concentrated solution between the first anion-exchange membrane and the second cation-exchange membrane and between the second anion-exchange membrane and the third cation-exchange membrane, adjacent to the anode plate.

## Patentansprüche

1. Verfahren zur Behandlung eines Abflusses aus einer Rauchgasentschwefelungsanlage, in der Schwefeloxide und Chlor enthaltendes Rauchgas mit Kalkstein oder einem hydratisierten Kalkschlamm in Berührung gebracht wird, das Schwefeloxidgas absorbiert und in dem Schlamm als Gips gebunden wird, und der Gips unter Zurücklassung einer Chloridionen enthaltenden Flüssigkeit abgetrennt wird, das umfaßt: das Abfiltrieren der die Chloridionen enthaltenden Flüssigkeit von hierin enthaltenem Gips/Steinkohlenflugasche durch Filtration, das Unterwerfen des Filtrats der Elektrodialyse in einem Elektrodialysator, welcher Konzentrations- und Verdünnungskammern umfaßt, gebildet aus einer abwechselnenden Anordnung von Kationenaustauschermembranen, welche Kationen selektiv durchlassen, sowie Anionenaustauschermembranen für einwertige Anionen, welche selektiv einwertige Anionen durchlassen, unter Bildung einer konzentrierten, Chloridionen enthaltenden Lösung in den Konzentrationskammern, und einer verdünnte Chloridionen enthaltenden Lösung in den Verdünnungskammern, das Unterziehen der konzentrierten Chloridionen enthaltenden Lösung einem weiteren Einengen durch Eindampfen in einer Verdampfungsvorrichtung, das Kneten der derart weiter konzentrierten Lösung mit Zement oder einem Gemisch aus Zement und Steinkohlenasche unter Bildung eines Feststoffs sowie das anschließende Entsorgen des Feststoffs durch Landauffüllung.

2. Verfahren gemäß Anspruch 1, bei dem die verdünnte, Chloridionen enthaltende Lösung als Zusatzwasser zur Entschwefelungsanlage rückgeführt wird.

3. Vorrichtung zur Behandlung des Abflusses aus einer Rauchgasentschwefelungsanlage, in der die Entschwefelung unter Verwendung eines alkalischen Mittels durchgeführt wird, wobei die Vorrichtung umfaßt: einen Filter zur Entfernung suspendierter Feststoffe aus dem Abfluß bis zu einer Trübung, die niedrig genug für die Behandlung durch einen Elektrodialysator ist, wobei der Abfluß in einen mit gelösten Stoffen angereicherten konzentrierten Abfluß und einen an den gelösten Stoffen armen verdünnten Abfluß getrennt wird, und wobei der Elektrodialysator mit dem Filter verbunden ist und mit einer wechselnden Anordnung von Kationenauschtauschermembranen, welche einwertige und zweiwertige Kationen selektiv durchlassen, und mit Anionenaustauschermembranen, welche lediglich einwertige Anionen selektiv durchlassen, mit Konzentrations- und Verdünnungskammern, die zwischen beiden Ionenaustauschermembranen abwechselnd vorgesehen sind, einer Vorrichtung zum Leiten der konzentrierten Lösung von den Konzentrationskammern des Elektrodialysators zur endgültigen Entsorgung sowie einer Vorrichtung zur Rückführung der verdünnten Lösung von den Verdünnungskammern als Zusatzwasser zur Entschwefelungsanlage ausgerüstet ist.

4. Vorrichtung gemäß Anspruch 3, die ferner eine Vorrichtung zum Einengen durch Eindampfen der aus den den Konzentrationskammern des Elektrodialysators abgezogenen konzentrierten Lösung umfaßt.

5. Vorrichtung gemäß Anspruch 3 oder 4, bei der die Ionenaustauschermembranen zwecks Bildung eines elektrischen Felds für Elektrophorese als Anionenaustauschermembranen an der Stelle der Anodenplatte ausgebildet sind, durch Anordnung von drei Anionenaustauschermembranen nacheinander, und, als Kationenaustauschermembranen an der Stelle der Kathodenplatte durch Anordnung von zwei Kationenaustauschermembranen nacheinander, wobei eine Kationenaustauschermembran und eine Anionenaustauschermembran abwechselnd angeordnet ist.

6. Verfahren zur Behandlung eines Abflusses aus einer Rauchgasentschwefelungsanlage gemäß Anspruch 1, dadurch gekennzeichnet, daß man eine Elektrodialyse durchführt, indem man hindurchleitet:
- einen Abfluß zwischen beiden Polplatten der Elektrodialysevorrichtung zur Behandlung eines Entschwefelungsabflusses gemäß einem der Ansprüche 3 bis 5 und die benachbart angeordneten Anionenaustauschermembranen,
- eine verdünnte Lösung zwischen der ersten Anionenaustauschermembran und der ersten Kationenaustauschermembran und zwischen der zweiten Anionenaustauschermembran und der zweiten Kationenaustauschermembran in Nachbarschaft zur Anodenplatte und
- eine konzentrierte Lösung zwischen der ersten Anionenaustauschermembran und der zweiten Kationenaustauschermembran und zwischen der zweiten Anionenaustauschermembran und der dritten Kationenaustauschermembran in Nachbarschaft zur Anodenplatte.

## Revendications

1. Procédé pour traiter un effluent d'un système de désulfuration de gaz de fumée, dans lequel le gaz de fumée contenant des oxydes sulfuriques et des valeurs de chlore est mis en contact avec de la chaux hydratée ou avec une boue calcaire, le gaz d'oxyde sulfurique étant absorbé et fixé dans la boue comme chaux sulfatée et la chaux sulfatée étant séparée laissant un liquide contenant des ions de chlorure, consistant en filtrant le liquide contenant les ions de chlorure des cendres volantes de chaux sulfatée/de charbon qui y sont présents par filtration, en soumettant le filtrat à une électrodialyse dans un électrodialyseur, contenant des compartiments de concentration et des compartiments de dilution formés par un arrangement alterné de membranes d'échange de cations qui filtrent de manière sélective les cations et des membranes d'échange d'anions univalents qui filtrent de manière sélective les anions univalents pour produire une solution concentrée contenant des ions de chlorure dans les compartiments de concentration et une solution diluée contenant des ions de chlorure dans les compartiments de dilution, soumettant la solution concentrée contenant des ions de chlorure à une concentration subséquente par évaporation dans un vaporisateur, mélangeant la solution ainsi concentrée avec du ciment ou un mélange de cendres de ciment et de charbon pour former une substance solide et ensuite disposant de la substance solide comme matière de remplissage de terre.

2. Procédé comme décrit à la revendication 1, dans lequel la solution diluée contenant des ions de chlorure est récylée comme eau d'appoint pour le système de désulfuration.

3. Dispositif pour traiter l'effluent d'un système de désulfuration de gaz de fumée, dans lequel la désulfuration est réalisée en faisant emploi d'un agent alcalin, le dispositif comportant un filtre pour enlever les substances solides suspendues de l'effluent à une turbidité qui est suffisamment basse pour un traitement avec un électrodialyseur dans lequel l'effluent doit être séparé en un effluent concentré enrichi avec des corps dissous et un effluent dilué épuisé des corps dissous, l'électrodialyseur étant en communication avec le filtre et étant équipé d'un arrangement alterné de membranes d'échange de cations qui filtrent de manière sélective les cations univalents et bivalents et des membranes d'échange d' anions qui filtrent de manière sélective les anions univalents, avec des compartiments de concentration et de dilution disposés alternativement entre les deux membranes d'échange d'ions, des moyens pour conduire la solution concentrée des compartiments de concentration de l'électrodialyseur pour la décharge finale, et des moyens pour récycler la solution diluée des compartiments de dilution comme eau d'appoint pour le système de désulfuration.

4. Dispositif suivant la revendication 3, qui comprend subséquemment un concentrateur pour concentrer par évaporation la solution concentrée dégagée des compartiments de concentration de l'électrodialyseur.

5. Dispositif suivant la revendication 3 ou 4, dans lequel les membranes d'échange d'ions, pour former un champ électrique pour l'électrophorèse, sont formées comme des membranes d'échange d'anions à l'endroit de la plaque anodique en appliquant consécutivement trois membranes d'échange d'anions et, comme membranes d'échange de cations à l'endroit de la plaque cathodique, en appliquant consécutivement deux membranes d'échange de cations, appliquant alternativement une membrane d'échange de cations et une membrane d'échange d'anions.

6. Procédé pour traiter un effluent d'un système de désulfuration de gaz de fumée, suivant la revendication 1, caractérisée par la réalisation de l'électrodialyse en faisant passer:
un effluent entre les deux plaques polaires du dispositif d'électrodialyse traitant la désulfuration de l'effluent suivant l'une des revendication 3 à 5 et les membranes d'échange des anions disposées de manière adjacente,
une solution diluée entre la première membrane d'échange d'anions et la première membrane d'échange de cations et entre la seconde membrane d'échange d'anions et la seconde membrane d'échange de cations, adjacent à la plaque anodique et
une solution concentrée entre la première membrane d'échange d'anions et la seconde membrane d'échange de cations et entre la seconde membrane d'échange d'anions et la troisième membrane d'échange de cations, adjacent à la plaque anodique.
